# EUROPÄISCHE PATENTSCHRIFT

(11) **EP 0 943 519 B1**
(45) Veröffentlichungstag und Bekanntmachung des Hinweises auf die Patenterteilung: **05.12.2001**
(21) Anmeldenummer: 99890073.2
(22) Anmeldetag: 02.03.1999
(51) Int. Cl.: B61C 9/46, B61F 3/16, B60B 27/00, B60K 7/00

(54) **Fahrzeugrad, insbesondere für ein Niederflurfahrzeug**
Vehicle wheel, especially for a low floor vehicle
Roue de véhicule, notamment pour un véhicule à plancher bas

(30) Priorität: 20.03.1998 AT 49798
(43) Veröffentlichungstag der Anmeldung: 22.09.1999
(73) Patentinhaber: Bombardier Transportation GmbH, 13627 Berlin (DE)
(72) Erfinder: Affeldt, Marek Dipl.-Ing., 90547 Stein (DE); Brinkmann, Andreas Dipl.-Ing., 42855 Remscheid (DE); Pieper, Reinhard, 57399 Kirchhundem (DE)
(74) Vertreter: Thielmann, Andreas

(56) Entgegenhaltungen:
- EP-A- 0 448 147
- EP-A- 0 698 540

## Beschreibung

Die Erfindung betrifft ein Fahrzeugrad, insbesondere für ein Niederflurfahrzeug, nach dem Oberbegriff des Patentanspruchs 1.

Die nachfolgende Beschreibung der Erfindung bezieht sich vorwiegend auf Schienenfahrzeuge, ist aber auch auf nichtschienengebundene Fahrzeuge anwendbar, indem anstelle des mit der Radnabe verbundenen Laufkranzes ein Reifen od. dgl. eingesetzt wird. Beispielsweise ist eine Anwendung des erfindungsgemäßen Fahrzeugrades auch bei Bussen, insbesondere Niederflurbussen, sogenannten People-movem oder Trolleybussen denkbar.

Bei Fahrzeugen wird in erster Linie zwischen Rädern unterschieden, welche angetrieben werden und solchen, welche ohne Antrieb mitlaufen, sogenannten Losrädern. Weitere Unterscheidungsmerkmale sind Ausstattungen der Räder mit Bremsen od. dgl. Je nach Art des Fahrzeugrades ist meist die Konstruktion unterschiedlich. Im Falle eines angetriebenen Rades ist dieses über ein Getriebe mit dem Motor verbunden. Im Falle eines Losrades ist dieses lediglich an der Achse drehbar gelagert. Die Kopplung des Rades mit dem Getriebe und dem Motor ist bei bekannten Fahrzeugen meist nur mit hohem Aufwand ein- und ausbaubar. Insbesondere bei Niederflurfahrzeugen, welche besonders im öffentlichen Verkehr immer mehr an Bedeutung gewinnen, ist aufgrund des geringen zur Verfügung stehenden Raumes die Unterbringung des Getriebes und des Motors schwer durchführbar. Um die geforderte Mindestbreite im Inneren eines Niederflurwagens erfüllen zu können, befindet sich der Motor sowie das Getriebe bei Niederflurfahrzeugen üblicherweise außerhalb der Räder. Der Abstand der Räder wieder ist bei Schienenfahrzeugen durch die Schienenbreite genau festgelegt. Um daher keine zu großen Ausmessungen des Fahrzeuges zu erreichen, wird für das Getriebe und den Antrieb eine möglichst platzsparende Anordnung angestrebt. Bei bekannten Schienenfahrzeugen liegt der Antrieb meist neben dem Fahrzeugrad und das Drehmoment wird über ein Getriebe, z.B. über ein Kardangetriebe, auf den Radreifen übertragen. Eine zusätzliche Forderung, insbesondere bei Niederflurschienenfahrzeugen, besteht darin, daß der Raum zwischen zwei Achsen eines Drehgestells für die Anordnung von Sitzplätzen zur Verfügung stehen sollte.

Radnabenantriebe, bei welchen das Fahrzeugrad über ein Getriebe mit dem Antrieb verbunden ist, sind beispielsweise aus der DE 35 07 232 A1 oder der EP 0 626 286 A2 bekannt. Derartige Radnabenantriebe weisen meist einen relativ hohen Aufwand bei der Montage bzw. Demontage auf.

Eingesetzt werden auch Radnabenmotoren, bei denen das Rad direkt ohne Zwischenschaltung eines Getriebes mit dem Antrieb verbunden ist. Diese sind in der Herstellung aber auch meist teurer. Weiters sind an der Radscheibe angeflanschte Getriebe, welche so die Verbindung zwischen dem Antrieb und dem Radreifen bewerkstelligen, bekannt. Derartige Fahrzeugräder sind beispielsweise aus der EP 0 464 929 A2, der EP 0 579 084 A1 oder der US 4 913 258 A bekannt.

Einzeln angetriebene Räder mit aufgepreßtem Getriebe sind zwar hinsichtlich der Platzanforderung vorteilhaft, jedoch ist ein Radwechsel durch das nur schwer lösbare Getriebe aufwendig. Ebenso ist bei der Verwendung eines Kegelradgetriebes ein Radwechsel immer mit einer kompletten Lösung des Getriebes verbunden.

Die Aufgabe der Erfindung besteht darin, ein Fahrzeugrad derart zu gestalten, daß dieses sowohl als angetriebenes Rad, als auch als Losrad mit oder ohne zusätzliche Bauteile, wie zum Beispiel Bremsen universell eingesetzt werden kann. Eine Umrüstung des Rades von angetrieben auf nicht angetrieben bzw. umgekehrt oder beispielsweise das Ausstatten eines Rades mit einer Bremse soll möglichst rasch und einfach durchführbar sein. Dadurch soll das Fahrzeug durch den Hersteller leicht an die jeweiligen Anforderungen anpaßbar sein. Nachteile bekannter Konstruktionen sollen vermieden oder zumindest reduziert werden.

Die erfindungsgemäße Aufgabe wird dadurch gelöst, daß die Einrichtung zum wahlweisen Anschluß der Bauteile einsetzbar ist, und daß an der außenseitigen Stirnfläche der Radnabe zumindest eine von der Einrichtung zum wahlweisen Anschluß der Bauteile räumlich getrennte Befestigungseinrichtung vorgesehen ist. Dadurch kann dasselbe Rad für den Einsatz als angetriebenes Rad oder als Losrad eingesetzt werden, indem wahlweise ein Getriebe oder eine Bremsscheibe an die Radnabe angebunden wird oder gar kein Bauteil bzw. lediglich eine Abdeckung od. dgl. angeschlossen wird. Dieser Aufbau des Rades erleichtert die Herstellung der Fahrzeugkomponenten wesentlich, da nicht mehr so viele unterschiedliche Komponenten allenfalls auf Anfrage angefertigt werden müssen, sondern mit wenigen Modulen das Auslangen gefunden wird. Beispielsweise kann es notwendig sein, bei Straßenbahnen, welche eine höhere Steigung bewältigen müssen, mehr angetriebene Räder vorzusehen, als bei Straßenbahnen, welche nur in der Ebene fahren. Somit kann der Fahrzeughersteller unabhängig vom zukünftigen Abnehmer die Komponenten herstellen und entsprechend den Anforderungen vor bei der Auslieferung zusammenstellen. Durch die räumliche Trennung der Drehmomentübertragung von weiteren Befestigungen wird die Montage bzw. Demontage des Fahrzeugrades erleichtert.

Gemäß einem weiteren Erfindungsmerkmal ist vorgesehen, daß die Einrichtung zum wahlweisen Anschluß der Bauteile Ausformungen, beispielsweise Verzahnungen od. dgl., und die daran anzuschließenden Bauteile entsprechend komplementär gestaltete Ausformungen aufweisen, zur Bildung eines drehfesten Formschlusses zwischen der Radnabe und den anzuschließenden Bauteilen. Dadurch ist eine sichere Übertragung des Drehmomentes auf das Rad bzw. vom Rad gewährleistet.

Gemäß einer bevorzugten Ausführungsvariante ist die Einrichtung zum wahlweisen Anschluß der Bauteile durch eine radiale Abstufung in der Radnabe gebildet, wobei zumindest zwei Befestigungsmöglichkeiten, beispielsweise Bohrungen mit Innengewinde, Bolzenverbindungen, Schraubenverbindungen od. dgl., vorzugsweise in gleichem Abstand von der Drehachse und in gleichen Winkelabständen vorgesehen sind. Der wahlweise anzuschließende Bauteil, wie zum Beispiel ein Getriebeteil oder eine Bremsscheibe ist dabei so ausgebildet, daß er in diese Aussparung paßt. Eine entsprechend symmetrische Anordnung der Verbindungsschrauben od. dgl. zur lösbaren Verbindung der Radnabe mit dem jeweiligen Bauteil gemeinsam mit der radialen Abstufung sichert einen ruhigen Lauf des Fahrzeugrades im Betrieb. Anstelle der radialen Abstufung kann natürlich auch eine flanschartige Anbindung an der Sirnfläche der Radnabe vorgesehen sein.

Vorteilhafterweise ist die oder jede Befestigungseinrichtung durch mindestens zwei Bohrungen mit Innengewinde, Bolzenverbindungen, Schraubenverbindungen od. dgl., vorzugsweise in gleichem Abstand von der Drehachse und in gleichen Winkelabständen gebildet. Die symmetrische Anordnung sichert wiederum einen ruhigen Lauf des Rades während des Betriebs.

Im Falle eines angetriebenen Rades ist gemäß einer bevorzugten Ausführungsform der Erfindung an der Einrichtung zum wahlweisen Anschluß der Bauteile ein Adapterring mit einer Stirnverzahnung angeordnet, welche Stimverzahnung in die Stirnverzahnung einer um die Achse angeordneten Hohlwelle eingreift, und ist die Hohlwelle über eine Ritzelwelle eines Motors antreibbar, und ist mit der oder jeder Befestigungseinrichtung ein Anschlußstück mit einem vorzugsweise zentralen Bohrung mit Innengewinde od. dgl. verbunden, und ist die Hohlwelle über eine in die Bohrung eingreifende Zentralschraube od. dgl., allenfalls unter Zwischenschaltung einer Druckscheibe od. dgl. kraftschlüssig mit der Radnabe verbunden. Durch diese Konstruktion wird beim angetriebenen Fahrzeugrad eine Trennung der Drehmomentübertragung vom Kraftschluß erzielt, was die Montage bzw. Demontage und somit die Wartung des Fahrzeugrades wesentlich erleichtert, da die Anbindung der Getriebeteile an die Radnabe nicht kraftschlüssig erfolgt. Lediglich durch Lösen der Zentralschraube od. dgl. kann das Fahrzeugrad vom Getriebe getrennt werden. Der mit der Radnabe verbundene Adapterring sichert die Übertragung des Drehmoments auf das Fahrzeugrad. Bei dieser Lösung muß gegenüber dem bekannten Stand der Technik das Getriebe nicht mehr geöffnet werden, da die Verbindung des Getriebes mit der Radnabe ohne Preßschluß erfolgen kann.

Gemäß einem weiteren Erfindungsmerkmal kann der Adapterring samt Stirnverzahnung auch einstückig mit der Radnabe, beispielsweise durch Gießen hergestellt sein. Dies bringt eine weitere Kostenersparnis bei der Herstellung des Fahrzeugrades mit sich.

Für ein nicht angetriebenes gebremstes Fahrzeugrad ist gemäß einer Ausführungsform der Erfindung vorgesehen, daß an der Einrichtung zum wahlweisen Anschluß der Bauteile eine Bremsscheibe angeordnet ist, und daß mit der Achse ein Bremssatteladapter zur Aufnahme des Bremssattels verbunden ist. Der Bremssattel steht gegenüber der rotierenden Bremsscheibe, so wie die Achse still. Durch wenige Handgriffe kann die Bremse des Losrades montiert bzw. demontiert und daher gewartet werden.

Zur Abdichtung der rotierenden von den feststehenden Teilen ist gemäß einer weiteren Konstruktionsvariante eines gebremsten Losrades an der oder jeder Befestigungseinrichtung ein Dichtungsring, vorzugsweise mit einer Labyrinthdichtung angeordnet.

Im Fall eines ungebremsten Losrades kann an der Einrichtung zum wahlweisen Anschluß der Bauteile ein Abdeckelement od. dgl. und/oder an der oder jeder Befestigungseinrichtung eine Abdeckkappe od. dgl. angeordnet sein und somit die darunterliegenden Konstruktionen vor Verschmutzung und Beschädigung geschützt werden.

Weitere Merkmale der Erfindung werden anhand der beigefügten Abbildungen näher erläutert.

Darin zeigen
- Fig. 1a: die Draufsicht auf ein Drehgestell eines Niederflurschienenfahrzeuges,
- Fig. 1b: die Seitenansicht des Drehgestells gemäß Fig. 1a,
- Fig. 2: eine Ausführungsform des erfindungsgemäßen Rades für ein Schienenfahrzeug,
- Fig. 3a: die Variante des Fahrzeugrades gemäß Fig. 2 als angetriebenes Rad ohne Bremse,
- Fig. 3b: die Variante des Fahrzeugrades gemäß Fig. 2 als nicht angetriebenes Rad ohne Bremse, und
- Fig. 3c: die Variante des Fahrzeugrades gemäß Fig. 2 als nicht angetriebenes Rad mit Scheibenbremse.

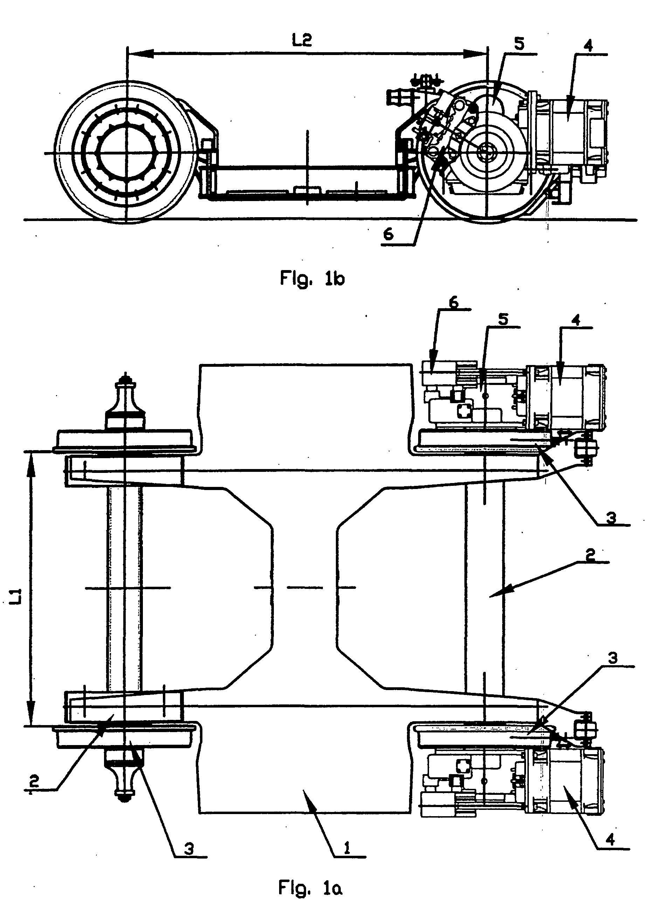

In Fig. 1a und Fig. 1b ist ein Drehgestell 1 eines Niederflurschienenfahrzeuges in Draufsicht und Seitenansicht dargestellt. Das Drehgestell 1 weist zwei Achsen 2 auf, von welchen die Räder der einen Achse, in der Darstellung die rechte Achse, angetrieben sind und die Räder der anderen Achse ohne Antrieb mitlaufen. Üblicherweise ist das Drehgestell 1 über Federungen mit dem Aufbau des Fahrzeuges verbunden (nicht dargestellt). Insbesondere bei Niederflurfahrzeugen ist der Raum zwischen den Rädern 3 einer Achse 2 möglichst frei zu halten, um ein Durchgehen der Fahrgäste ohne Überwindung von Stufen zu ermöglichen. Dementsprechend sollen zwischen den Rädem 3 einer Achse entsprechend der Länge L₁ möglichst keine Einbauten vorgesehen sein. Darüber hinaus ist es zweckmäßig, und meist auch gefordert, den Bereich zwischen den Achsen 2 eines Drehgestells 1 entsprechend der Länge L₂ möglichst von Einbauten freizuhalten, um auch dort für eine optimale Platzausnützung die Anordnung von Sitzplätzen mit entsprechender Fußfreiheit zu ermöglichen. Dementsprechend steht nur ein geringer Raum für einen Antrieb der Räder 3 zur Verfügung. Im dargestellten Ausführungsbeispiel werden die zwei angetriebenen Räder 3 von jeweils einem längsliegenden, d.h. in Fahrtrichtung orientierten Motor 4, der über ein Getriebe 5 mit dem Rad 3 verbunden ist, angetrieben. Sowohl die angetriebenen als auch die nichtangetriebenen Räder 3 können auch eine Bremse 6 enthalten. Der Ausbau, insbesondere eines angetriebenen Rades 3 ist bei bekannten Radanbindungen relativ aufwendig, da zuerst allfällige Bremsen 6 demontiert werden müssen, danach das Getriebe 5 geöffnet und vom Rad 3 abgezogen werden muß und schließlich das Rad 3 ausgewechselt werden muß.

Darüber hinaus sind bei bekannten Konstruktionen Losradachsen und angetriebene Achsen unterschiedlich ausgeführt, was eine nachträgliche Änderung aufgrund unterschiedlicher Anforderungen erschwert. Deshalb müssen die Fahrzeuge und deren Bestandteile meist entsprechend den jeweiligen Anforderungen angefertigt werden.

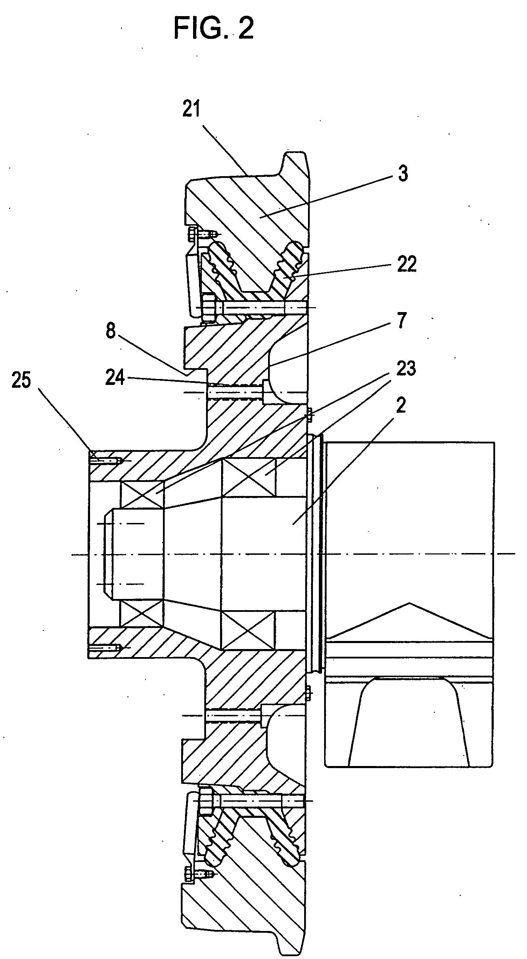

Fig. 2 zeigt eine Ausführungsform eines erfindungsgemäßen Rades 3 für ein Schienenfahrzeug. Das Rad 3 kann einstückig hergestellt sein oder ein Laufkranz 21 über ein elastisches Element 22 mit der Radnabe 7 verbunden sein. Die Radnabe 7 ist über Rollager 23 auf einer feststehenden Achse 2 gelagert. Erfindungsgemäß weist die Radnabe 7 an ihrer außenseitigen Stirnseite eine Einrichtung zum wahlweisen Anschluß von Bauteilen zur Übertragung eines Drehmomentes zwischen der Radnabe 7 und den anzuschließenden Bauteilen auf, welche durch eine radiale Abstufung 8 in der Radnabe 7 gebildet ist. Zur Sicherung jener Bauteile, auf die das Drehmoment übertragen werden soll, können Befestigungsmöglichkeiten, beispielsweise in Form von Bohrungen 24 vorgesehen sein. Die Bohrungen 24 sind vorzugsweise in gleichem Abstand von der Drehachse und in gleichen Winkelabständen angeordnet und können mit einem Innengewinde zur Aufnahme von Befestigungsschrauben 16 ausgestattet sein. Anstelle der Bohrungen 24 können auch Bolzen an der Radnabe 7 angeordnet sein (nicht dargestellt). Der Zweck der Bohrungen 24, Bolzenverbindungen, Schraubenverbindungen od. dgl. ist eine Sicherung der anzuschließenden Bauteile, auf die das Drehmoment übertragen werden soll, vor Verdrehung gegenüber der Radnabe 7. Zur Befestigung weiterer Komponenten sind an der äußersten Stirnfläche der Radnabe 7 Bohrungen 25 od. dgl. angeordnet, die vorzugsweise mit einem Innengewinde ausgestattet sind. Auch hier können anstelle der Bohrungen 25 auch Bolzenverbindungen, Schraubenverbindungen od. dgl. Anwendung finden (nicht dargestellt). An diese Schnittstelle werden je nach Anwendung des Rades verschiedene Bauteile befestigt.

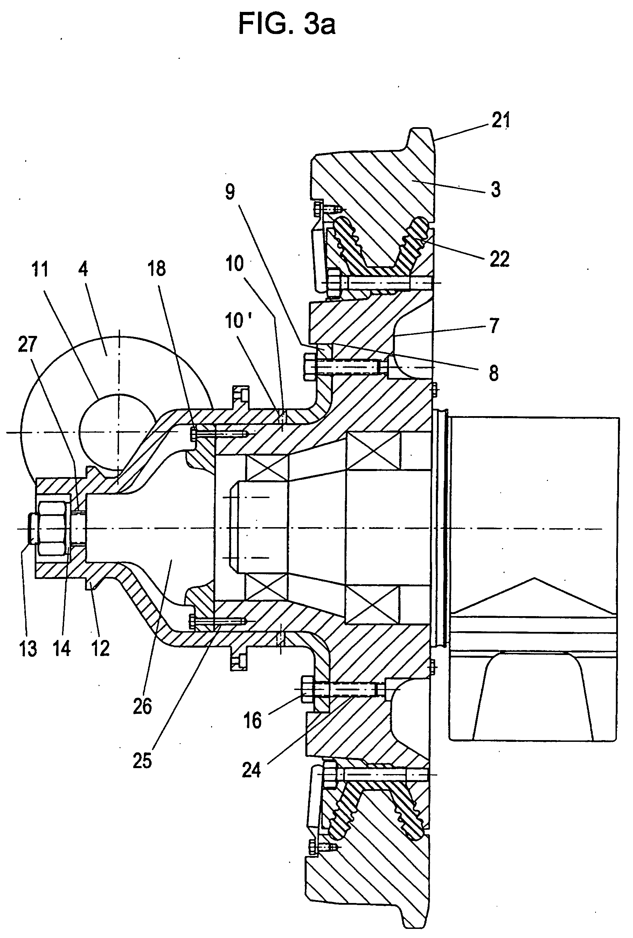

In Fig. 3a ist eine erfindungsgemäße Variante des Rades 3 gemäß Fig. 2 als angetriebenes Rad 3 ohne Bremse für ein Niederflurschienenfahrzeug dargestellt. Das Rad 3 ist an ein längsliegendes Getriebe (nicht dargestellt) angebunden, dessen Ritzelwelle 11 sichtbar ist. In die erfindungsgemäße Einrichtung zum wahlweisen Anschluß eines Bauteils in Form der radialen Abstufung 8 wird ein Adapterring 9 eingesetzt und über Befestigungsschrauben 16, welche in die Bohrungen 24 der Radnabe 7 eingedreht werden, drehsicher verbunden. Zur Zentrierung und Verhinderung eines Verdrehens können komplementär gestaltete Elemente an Radnabe 7 und Adapterring 9 vorgesehen sein (nicht dargestellt). Im dargestellten Beispiel eines angetriebenen Rades weist der Adapterring 9 eine Stirnverzahnung 10 auf, über die das Drehmoment des Motors 4 auf das Rad 3 übertragen wird. Im dargestellten Beispiel wird das Drehmoment des Antriebsmotors 4 über die Ritzelwelle 11 des Getriebes auf eine Hohlwelle 12 übertragen, welche mit einer Stirnverzahnung 10' in die Stirnverzahnung 10 des Adapterringes 9 eingreift. Für einen ausreichenden Kraftschluß ist an der erfindungsgemäßen Einrichtung zur Kraftübertragung an der Radnabe ein Anschlußstück 26 beispielsweise mit Befestigungsschrauben 18, welche in die Bohrungen 25 der Radnabe 7 eingeschraubt werden, befestigt. Das Anschlußstück 26 weist eine zentrale Bohrung 27 auf, über die mittels einer Zentralschraube 13 unter Zwischenschaltung einer Druckscheibe 14 die Hohlwelle 12 kraftschlüssig mit der Radnabe 7 verbunden wird. Anstelle der Zentralschraube 13 und Bohrung 27 können natürlich auch andere Befestigungselemente vorgesehen sein. Auch ist die Druckscheibe 14 nicht zwingend notwendig. Wesentlich bei der Konstruktion ist die räumliche Trennung der Drehmomentübertragung von der Kraftübertragung. Dadurch kann eine Demontage bzw. Montage des angetriebenen Rades 3 leichter erfolgen, da keine Getriebeteile in aufwendiger Weise geöffnet und keine Preßverbindungen gelöst werden müssen.

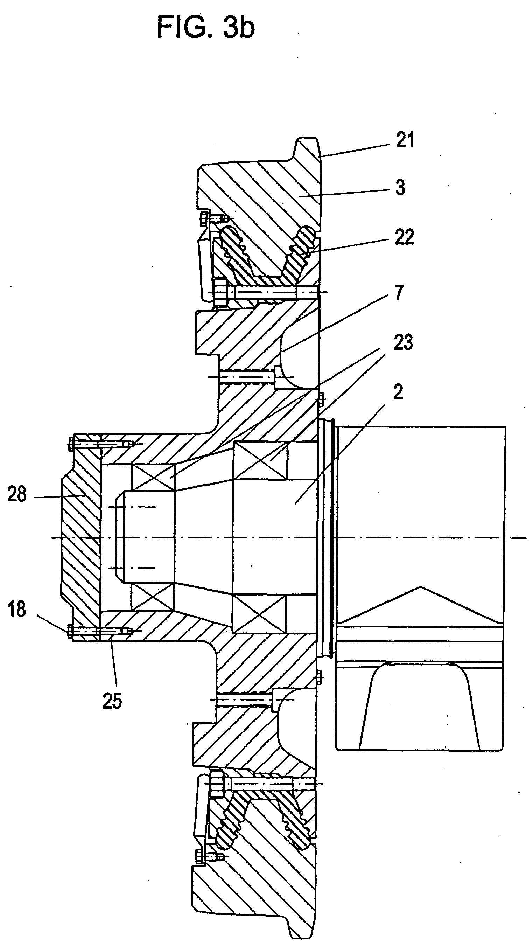

Fig. 3b zeigt eine Ausführung des erfindungsgemäßen Rades 3 als nicht angetriebenes und ungebremstes Losrad. In diesem Fall kann lediglich eine Abdeckkappe 28 mit Befestigungsschrauben 18, welche in die Bohrungen 25 der Radnabe 7 eingedreht werden am Rad befestigt. Da eine Drehmomentübertragung auf bzw. von anderen Bauteilen in diesem Fall nicht stattfindet, wird an die radiale Abstufung 8 an der äußeren Stirnfläche der Radnabe 7 kein Bauteil befestigt. Es könnte allerdings auch hier ein Deckel od. dgl. zum Schutz montiert werden (nicht dargestellt).

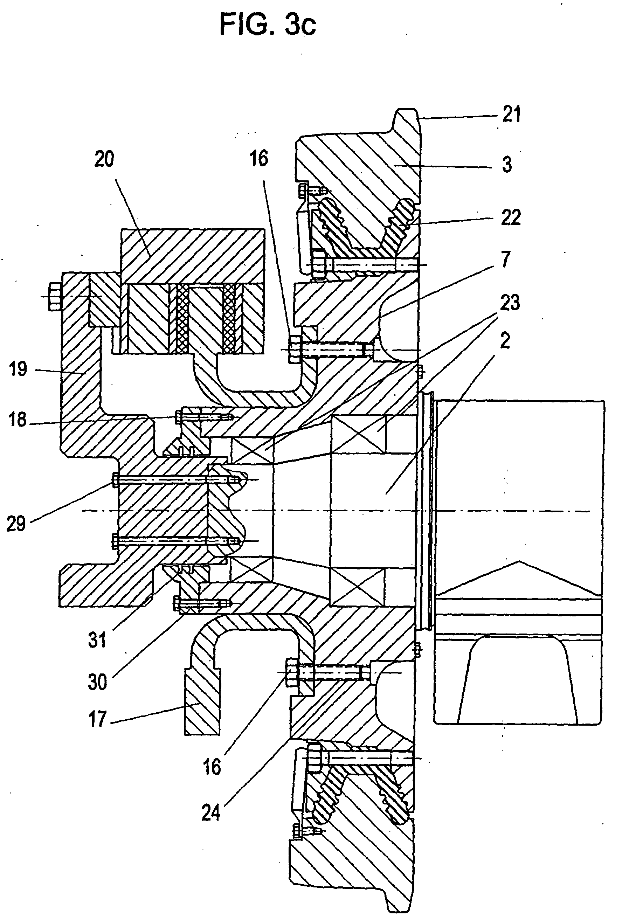

In Fig. 3c ist eine Variante des Rades 3 als Losrad mit Bremse dargestellt. In diesem Fall wird anstelle des beim angetriebenen Rad 3 verwendeten Adapterringes 9 (siehe Fig. 3a) die Bremsscheibe 17 mit der Radnabe 7, beispielsweise über Befestigungsschrauben 16 verbunden. Der Bremssattel 20 mit den Bremsbacken (nicht dargestellt) wird über einen Bremssatteladapter 19 mit der feststehenden Achse 2, beispielsweise über Befestigungsschrauben 29 verbunden. Die Radnabe 7 und die Bremsscheibe 17 rotieren, während der Bremssattel 20 stillsteht. Zur Abdichtung kann zwischen den rotierenden und stillstehenden Teilen ein Dichtungsring 30 mit einer Labyrinthdichtung 31 mit der Radnabe 7 über die Befestigungsschrauben 18 verbunden werden.

## Patentansprüche

1. Fahrzeugrad (3), insbesondere für ein Niederflurfahrzeug, mit einer auf einer feststehenden Achse (2) drehbar gelagerten Radnabe (7), und einem mit der Radnabe allenfalls elastisch verbundenen Laufkranz (21), Reifen od. dgl., wobei an der außenseitigen Stirnfläche der Radnabe eine Einrichtung zum Anschluß von Bauteilen, wie beispielsweise einem Getriebeteil oder einer Bremsscheibel (17), zur Übertragung eines Drehmomentes zwischen der Radnabe und den anzuschließenden Bauteilen vorgesehen ist, **dadurch gekennzeichnet, daß** die Einrichtung zum wahlweisen Anschluß der Bauteile einsetzbar ist, und daß an der außenseitigen Stirnfläche der Radnabe (7) zumindest eine von der Einrichtung zum wahlweisen Anschluß der Bauteile räumlich getrennte Befestigungseinrichtung vorgesehen ist.

2. Fahrzeugrad nach Anspruch 1, **dadurch gekennzeichnet, daß** die Einrichtung zum wahlweisen Anschluß der Bauteile Ausformungen, beispielsweise Verzahnungen od. dgl., und die daran anzuschließenden Bauteile entsprechend komplementär gestaltete Ausformungen aufweisen, zur Bildung eines drehfesten Formschlusses zwischen der Radnabe (7) und den anzuschließenden Bauteilen.

3. Fahrzeugrad nach Anspruch 1 oder 2, **dadurch gekennzeichnet, daß** die Einrichtung zum wahlweisen Anschluß der Bauteile durch eine radiale Abstufung (8) in der Radnabe (7) gebildet ist, wobei zumindest zwei Befestigungsmöglichkeiten, beispielsweise Bohrungen (24) mit Innengewinde, Bolzenverbindungen, Schraubenverbindungen od. dgl., vorzugsweise in gleichem Abstand von der Drehachse und in gleichen Winkelabständen vorgesehen sind.

4. Fahrzeugrad nach einem der Ansprüche 1 bis 3, **dadurch gekennzeichnet,, daß** die oder jede Befestigungseinrichtung durch mindestens zwei Bohrungen (25) mit Innengewinde, Bolzenverbindungen, Schraubenverbindungen od. dgl., vorzugsweise in gleichem Abstand von der Drehachse und in gleichen Winkelabständen gebildet ist.

5. Fahrzeugrad nach einem der Ansprüche 1 bis 3, **dadurch gekennzeichnet, daß** an der Einrichtung zum wahlweisen Anschluß der Bauteile ein Adapterring (9) mit einer Stirnverzahnung (10) angeordnet ist, welche Stirnverzahnung (10) in die Stirnverzahnung (10') einer um die Achse (2) angeordneten Hohlwelle (12) eingreift, und die Hohlwelle (12) über eine Ritzelwelle (11) eines Motors (4) antreibbar ist, und daß mit der oder jeder Befestigungseinrichtung ein Anschlußstück (26) mit einem vorzugsweise zentralen Bohrung (27) mit Innengewinde od. dgl. verbunden ist, und die Hohlwelle (12) über eine in die Bohrung (27) eingreifende Zentralschraube (13) od. dgl., allenfalls unter Zwischenschaltung einer Druckscheibe (14) od. dgl. kraftschlüssig mit der Radnabe (7) verbunden ist.

6. Fahrzeugrad nach Anspruch 5, **dadurch gekennzeichnet, daß** der Adapterring (9) samt Stimverzahnung (10) einstückig mit der Radnabe (7), beispielsweise durch Gießen hergestellt ist.

7. Fahrzeugrad nach einem der Ansprüche 1 bis 3, **dadurch gekennzeichnet, daß** an der Einrichtung zum wahlweisen Anschluß der Bauteile eine Bremsscheibe (17) angeordnet ist, und daß mit der Achse (2) ein Bremssatteladapter (19) zur Aufnahme des Bremssattels (20) verbunden ist.

8. Fahrzeugrad nach Anspruch 7, **dadurch gekennzeichnet, daß** an der oder jeder Befestigungseinrichtung ein Dichtungsring (30), vorzugsweise mit einer Labyrinthdichtung (31) angeordnet ist.

9. Fahrzeugrad nach einem der Ansprüche 1 bis 4, **dadurch gekennzeichnet, daß** an der Einrichtung zum wahlweisen Anschluß der Bauteile ein Abdeckelement od. dgl. und/oder an der oder jeder Befestigungseinrichtung eine Abdeckkappe (28) od. dgl. angeordnet ist.

## Claims

1. A vehicle wheel (3), in particular for a low-platform vehicle, including a wheel hub (7) rotatably mounted on a stationary axle (2), and a running tread (21), tire or the like connected with said wheel hub optionally in an elastic manner, a means for connecting structural components, such as a transmission part or a brake disk (17), for transmitting a torque between the wheel hub and the structural components to be connected being provided on the external end face of the wheel hub, **characterized in that** the means for facultatively connecting the structural components is insertable and that at least one fastening means spacially separated from the means for facultatively connecting the structural components is provided on the external end face of said wheel hub (7).

2. A vehicle wheel according to claim 1, **characterized in that** the means for facultatively connecting structural components comprises formations, such as, for instance, toothings or the like, and the structural components to be connected comprise accordingly shaped complementary formations in order to provide a rotationally fast positive engagement between the wheel hub (7) and the structural components to be connected.

3. A vehicle wheel according to claim 1 or 2, **characterized in that** the means for facultatively connecting the structural components is constituted by a radial step (8) provided in the wheel hub (7), wherein at least two fastening facilities, e.g. internally threaded bores (24), bolt connections, screw connections or the like, are provided, preferably at equal distances from the axis of rotation and at equal angular distances.

4. A vehicle wheel according to any one of claims 1 to 3, **characterized in that** the or each fastening arrangement is formed by at least two internally threaded bores (25), bolt connections, screw connections or the like, preferably at equal distances from the axis of rotation and at equal angular distances.

5. A vehicle wheel according to any one of claims 1 to 3, **characterized in that** the means for facultatively connecting structural elements comprises an adapter ring (9) with an end toothing (10), which end toothing (10) engages in the end toothing (10') of a hollow shaft (12) arranged about the axle (2), and the hollow shaft (12) is drivable via a pinion shaft (11) of a motor (4), and a connection piece (26) including a preferably central bore (27) provided with an internal thread or the like is connected with the or each fastening means, and the hollow shaft (12) is non-positively connected with the wheel hub (7) via a central screw (13) or the like engaging in the bore (27) optionally upon interposition of a pressure disk (14) or the like.

6. A vehicle wheel according to claim 5, **characterized in that** the adapter ring (9) with its end toothing (10) is produced in one piece with the wheel hub (7), for instance by casting.

7. A vehicle wheel according to any one of claims 1 to 3, **characterized in that** a brake disk (17) is arranged on the means for facultatively connecting structural components and a caliper adapter (19) for receiving the brake caliper (20) is connected with the axle (2).

8. A vehicle wheel according to claim 7, **characterized in that** a sealing ring (30), preferably including a labyrinth seal (31), is arranged on the or each fastening means.

9. A vehicle wheel according to any one of claims 1 to 4, **characterized in that** a cover element or the like is arranged on the means for facultatively connecting strucutral components and/or a cap (28) or the like is arranged on the or each fastening means.

## Revendications

1. Roue de véhicule (3), en particulier pour un véhicule à structure surbaissée, avec un moyeu de roue (7) monté à rotation sur un axe (2) fixe, et avec une bande de roulement (21) reliée dans tous les cas de façon élastique avec le moyeu de roue, des pneus ou similaire, dans lesquels, au niveau de la face frontale extérieure du moyeu de roue, un dispositif pour la fixation de composants, comme par exemple un élément de transmission ou un disque de freinage (17), est prévu pour la transmission d'un couple entre le moyeu de roue et les composants connectés, **caractérisée en ce que** le dispositif est susceptible de connecter sélectivement les composants, et **en ce que**, au niveau de la surface frontale extérieure du moyeu de roue (7), au moins un dispositif de fixation est prévu, séparé dans l'espace par rapport au dispositif de connexion sélective des composants.

2. Roue de véhicule selon la revendication 1, **caractérisée en ce que** le dispositif de connexion sélective des composants présente des parties en relief, par exemple des dentures ou similaires, et les composants se connectant à ceux-ci présentent des formes en relief réalisées de façon complémentaire correspondantes, pour former un engagement positif fixé en rotation entre le moyeu de roue (7) et les composants à connecter.

3. Roue de véhicule selon la revendication 1 ou 2, **caractérisée en ce que** le dispositif de connexion sélective des composants est formé par un gradin radial (8) dans le moyeu (7), dans lequel au moins deux possibilités de fixation, par exemple des alésages (24) avec des filetages intérieurs, des liaisons par boulons, des liaisons par vis ou similaires, sont disposés de préférence avec un même écart par rapport à l'axe de rotation et à de mêmes écarts angulaires.

4. Roue de véhicule selon l'une quelconque des revendications 1 à 3, **caractérisée en ce que** le ou chacun des dispositifs de fixation est formé d'au moins alésages (25) présentant des filetages intérieurs, des liaisons par boulons, des liaisons par vis ou similaires, avec de préférence un même écart par rapport à l'axe de rotation et avec de mêmes écarts angulaires.

5. Roue de véhicule selon l'une quelconque des revendications 1 à 3, **caractérisée en ce que**, au niveau du dispositif pour la connexion sélective des composants, un anneau d'adaptation (9) à crantage frontal (10) est agencé, ledit crantage frontal (10) venant en prise dans le crantage frontal (10') d'un arbre creux (12) agencé autour de l'axe (2), et l'arbre creux (12) étant susceptible d'être entraîné par un arbre de pignon (11) d'un moteur (4), et **en ce que**, avec le ou chacun des dispositifs de fixation, une partie de connexion (26) est reliée de préférence avec un alésage central (27) présentant un filetage intérieur ou similaire, et l'arbre creux (12) est relié au moyeu (7) par l'intermédiaire d'une vis centrale (13) ou similaire venant en prise dans l'alésage (27), dans tous les cas par intercalage d'une rondelle de pression (14) ou similaire par adhérence.

6. Roue de véhicule selon la revendication 5, **caractérisée en ce que** l'anneau d'adaptation (9) rassemble de façon monobloc le crantage frontal avec le moyeu (7), par exemple par une fabrication par moulage.

7. Roue de véhicule selon l'une quelconque des revendications 1 à 3, **caractérisée en ce que** un disque de frein (17) est agencé au niveau du dispositif de connexion sélective des composants, et **en ce que** un adaptateur d'étrier de frein (19) est relié à l'axe (2) pour le logement d'un étrier de frein (20).

8. Roue de véhicule selon la revendication 7, **caractérisée en ce que**, au niveau de chaque dispositif de fixation, un anneau d'étanchéité (30), de préférence avec une garniture à labyrinthe (31) est agencé.

9. Roue de véhicule selon l'une quelconque des revendications 1 à 4, **caractérisée en ce que**, au niveau du dispositif de connexion sélective des composants, un élément de masquage ou similaire et/ou au niveau du ou de chaque dispositif de fixation, un capot de masquage (28) ou similaire est agencé.
